# FASCICULE DE BREVET EUROPEEN

(11) **EP 4 414 219 B1**
(45) Date de publication et mention de la délivrance du brevet: **03.06.2026**
(21) Numéro de dépôt: 24155216.5
(22) Date de dépôt: 01.02.2024
(51) Int. Cl.: B60R 13/01, B60R 5/04, B60R 7/02

(54) **ZONE DE CHARGEMENT D'UN VÉHICULE**
LADERAUM EINES FAHRZEUGS
LOADING AREA OF A VEHICLE

(30) Priorité: 10.02.2023 IN 202311008705; 11.04.2023 FR 2303591
(43) Date de publication de la demande: 14.08.2024
(73) Titulaire: Renault s.a.s, 92100 Boulogne Billancourt (FR)
(72) Inventeur: DEYSSON, Guillaume, 78280 GUYANCOURT (FR); MECHELAERE, Arnaud, 78280 GUYANCOURT (FR); MURALI, Premkumar, 603002 Kancheepuram (IN); SCHLEUNIGER, Mathias, 78280 GUYANCOURT (FR); SELVAM, Siddharthsurya, 603002 Kancheepuram (IN); THANGAVEL, Muralikumar, 603002 Kancheepuram (IN)

(56) Documents cités:
- DE-U1- 202005 007 157
- US-A- 5 322 335
- US-A1- 2015 084 377
- US-B1- 11 279 300
- US-B2- 6 644 709

## Description

### DOMAINE DE L'INVENTION

La présente invention concerne la gestion d'un chargement dans des véhicules automobiles. La présente invention concerne, plus particulièrement, une zone de chargement faisant appel à un revêtement repliable.

### ARRIÈRE-PLAN TECHNOLOGIQUE DE L'INVENTION

L'objet abordé dans la partie arrière-plan technologique ne saurait être considéré comme constituant l'art antérieur du fait de sa simple mention dans la partie arrière-plan technologique. De la même façon, un problème évoqué dans la partie arrière-plan technologique ou associé à l'objet de la partie arrière-plan technologique ne saurait être considéré comme ayant été précédemment identifié dans l'art antérieur. L'objet dans la partie arrière-plan technologique représente tout au plus des approches différentes qui, en soi, pourront correspondre à des mises en œuvre de la technologie revendiquée.

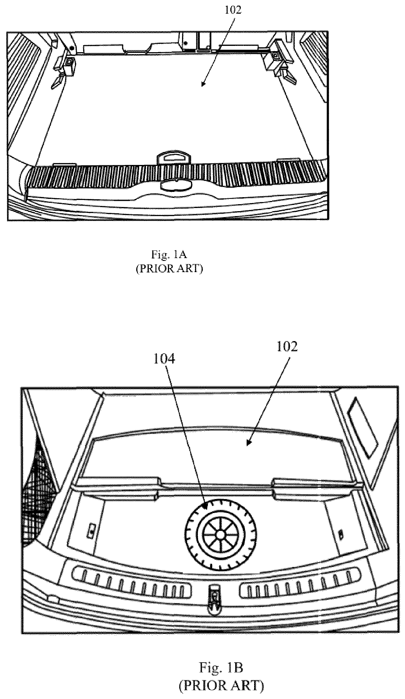

Un coffre d'un véhicule, également connu sous le nom de zone de chargement, sert au rangement de bagages. La taille de la zone de chargement varie en fonction du type et de la taille des véhicules. À titre d'exemple, la zone de chargement est petite dans les voitures à hayon et grande dans les berlines ou les véhicules utilitaires sportifs (ou SUV pour Sport Utility Vehicle en anglais). On trouvera davantage de précisions en se reportant aux figures 1A et 1B qui illustrent une structure classique de zones de chargement dans des véhicules. Une surface de dessous d'une zone de chargement porte le nom de plancher de charge 102, autrement dit un panneau plat sur lequel on place les bagages. D'une façon générale, sous le plancher de charge 102, des objets tels que des pneus de secours et des crics sont rangés dans une zone prédéfinie. Le plancher de charge 102 recouvre ces objets et procure une surface plate pour la mise en place d'autres objets à transporter dans un véhicule.

Comme l'illustre la figure 1B, il est nécessaire de soulever le plancher de charge 102 pour avoir accès à un objet tel qu'un pneu de secours 104 rangé sous le plancher de charge 102. L'accès à des objets rangés sous le plancher de charge 102 devient problématique lorsque d'autres objets sont placés sur le plancher de charge 102. Dans ce genre de situation, pour avoir accès à l'objet placé sous le plancher de charge 102, un utilisateur se voit obligé de retirer tous les objets rangés sur le plancher de charge 102 puis de replacer les objets en question sur le plancher de charge 102. Ce mode de rangement des objets sur le plancher de charge 102 et d'accès aux objets est fastidieux et peu pratique pour un utilisateur. Par ailleurs, la zone prédéfinie située sous le plancher de charge 102 ne peut pas servir au rangement d'autres objets que ceux pour laquelle elle a été conçue, notamment le pneu de secours 104.

Au vu des inconvénients évoqués ci-dessus, un besoin existe de structurer une zone de chargement d'un véhicule de sorte à permettre à un utilisateur d'avoir aisément accès à l'espace de rangement pour y ranger différents objets comme il se doit.

Le document US 6644709 B2 divulgue un exemple de zone de chargement d'un véhicule.

Un but de la présente invention est de proposer une zone de chargement de véhicules qui permette l'accès sans entrave à des compartiments inférieurs situés sous un plancher de charge.

Un autre but de la présente invention est de proposer un revêtement pour une zone de chargement d'un véhicule qui élimine l'obligation de soulever la totalité du revêtement lors de l'accès à des compartiments inférieurs.

Un autre but encore de la présente invention est de proposer un revêtement pour une zone de chargement d'un véhicule qui permette une mise en place sûre et sécurisée d'objets de grandes dimensions dans la zone de chargement.

### RÉSUMÉ DE L'INVENTION

Le résumé vise à présenter des aspects relatifs à la gestion d'un chargement dans un véhicule, et les aspects sont plus amplement décrits par la suite dans la description détaillée. Ce résumé ne prétend ni identifier des caractéristiques essentielles de l'objet revendiqué, ni servir à définir ou à limiter la portée de l'objet revendiqué.

La présente invention porte sur une zone de chargement d'un véhicule selon la revendication 1.

Selon l'invention, chacun des au moins deux éléments longitudinaux comporte au moins deux sections dans le sens d'une largeur du véhicule, les au moins deux sections étant unies entre elles de façon mobile au niveau d'extrémités de jonction. Selon un aspect, les au moins deux sections de chaque élément longitudinal sont enveloppées dans un tissu pour rester en contact entre elles et permettre un mouvement au niveau des extrémités de jonction.

Selon un aspect, les au moins deux sections de chaque élément longitudinal sont repliables les unes sur les autres, en partant d'une extrémité arrière du véhicule.

Selon un aspect, les au moins deux sections de chaque élément longitudinal sont repliées pour s'empiler contre un siège arrière du véhicule de sorte que lesdites sections repliées soient stables au cours du mouvement du véhicule.

Selon un aspect, des extrémités arrière de chaque élément longitudinal s'étendent au-delà d'un bord de dessus de la zone de chargement pour permettre une manœuvre individuelle de chaque élément longitudinal.

Selon l'învention, le revêtement comporte des éléments de renfort intégrés à une ou plusieurs sections des au moins deux éléments longitudinaux, les éléments de renfort étant intégrés au niveau d'un bord des éléments longitudinaux en regard d'un autre, et des bras de dessous des éléments de renfort reposant sur un bord de dessus de la zone de chargement pour soutenir la charge d'objets placés sur le revêtement.

Selon un aspect, l'élément de renfort est une pièce rapportée en forme de 'J'.

D'autres buts, caractéristiques et avantages de la présente invention ressortiront mieux et seront mieux comprises à la lecture de la description qui suit faite en référence aux dessins joints.

### BRÈVE DESCRIPTION DES DESSINS JOINTS

Les dessins joints font partie de la description et permettent de mieux comprendre la présente invention. Ces dessins joints illustrent les modes de réalisation de la présente invention servant à décrire les principes de la présente invention. Les modes de réalisation sont illustrés, à titre d'exemple non limitatif, sur les figures des dessins joints sur lesquelles les références désignent des éléments similaires. Il convient de noter que des références à "un" mode de réalisation dans cette invention ne portent pas nécessairement sur le même mode de réalisation et qu'elles s'entendent comme au moins un. Sur les dessins :
[Fig.1A] et [Fig.1B] illustrent une structure classique de zones de chargement dans des véhicules, selon l'art antérieur ;
[Fig. 2] illustre une vue en perspective de dessus d'une zone de chargement d'un véhicule, selon un mode de réalisation de la présente invention ;
[Fig. 3] illustre une vue de face en coupe d'un revêtement de la zone de chargement, selon un mode de réalisation de la présente invention ;
[Fig. 4] illustre une vue de côté de la zone de chargement, selon un mode de réalisation de la présente invention ;
[Fig. 5] illustre un mécanisme de soulèvement d'éléments longitudinaux du revêtement, selon un mode de réalisation de la présente invention ; et
[Fig. 6A] et [Fig. 6B] illustrent différents agencements réalisés dans la zone de chargement du véhicule pour le rangement de différents types d'objets, selon un mode de réalisation de la présente invention.

### DESCRIPTION DÉTAILLÉE DE L'INVENTION

La description détaillée donnée ci-dessous en liaison avec les dessins annexés se veut une description de divers modes de réalisation de la présente invention et ne prétend pas représenter les seuls modes de réalisation selon lesquels la présente invention pourra être mise en pratique. Chaque mode de réalisation décrit aux présentes n'est donné qu'à titre d'exemple ou d'illustration de la présente invention et ne saurait être nécessairement considéré comme étant préférable à d'autres modes de réalisation ou plus avantageux qu'eux. La description détaillée contient des précisions visant à favoriser une compréhension en profondeur de la présente invention. L'homme du métier appréciera toutefois que la présente invention pourra être mise en pratique sans ces précisions.

Aux présentes, les termes "ou" et "et/ou" s'entendent comme inclusifs ou au sens d'un quelconque ou d'une combinaison quelconque. Il s'ensuit que "A, B ou C" ou "A, B et/ou C" signifie "au choix : A ; B ; C ; A et B ; A et C ; B et C ; A, B et C." Cette définition n'admet d'exception que lorsque, d'une façon à une autre, des éléments, fonctions, étapes ou actions employés en combinaison s'excluent intrinsèquement les uns les autres.

Certains modes de réalisation de la présente invention, qui en illustrent toutes les caractéristiques, vont être exposés en détail. Les termes "comprenant", "possédant", "contenant" et "comportant", ainsi que d'autres formes de ces termes, s'entendent comme étant de sens équivalent et non limitatifs dans la mesure où un élément/des éléments qui suit/suivent l'un quelconque de ces termes ne prétend/prétendent pas en constituer une énumération exhaustive ou y être limités.

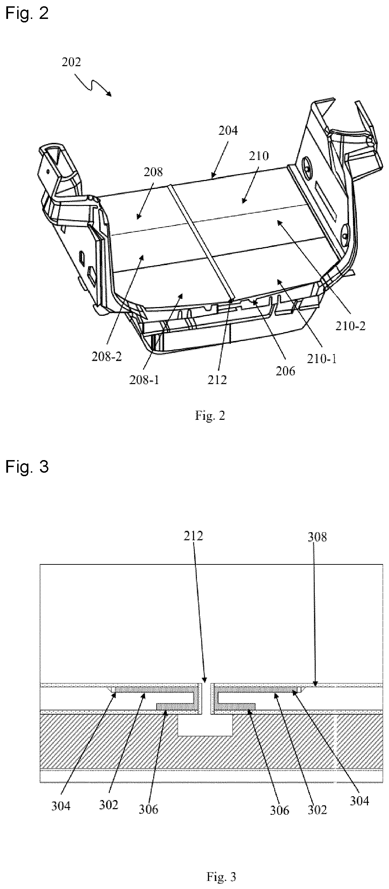

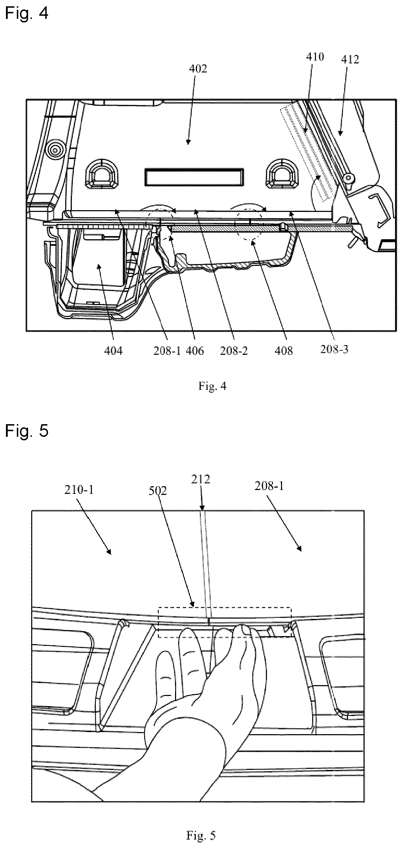

La figure 2 illustre une vue en perspective de dessus d'une zone de chargement 202 d'un véhicule, selon un mode de réalisation de la présente invention. La zone de chargement 202 comporte un revêtement utilisé comme plancher de charge. Le revêtement divise la zone de chargement 202 en un compartiment supérieur et un compartiment inférieur (visibles sur la figure 4). Une extrémité distale 204 du revêtement pourra être articulée sur un plancher du véhicule, derrière les sièges arrière. Une extrémité proximale 206 du revêtement est libre et repose sur un bord arrière du plancher du véhicule, de sorte que l'extrémité proximale 206 soit accessible à un utilisateur se tenant debout derrière le véhicule. Le revêtement comporte au moins deux éléments longitudinaux 208, 210 manœuvrables indépendamment pour permettre l'accès au compartiment inférieur de la zone de chargement 202. Un dégagement 212, large de 4 mm environ et long de quelques centimètres, pourra être présent entre le premier élément longitudinal 208 et le deuxième élément longitudinal 210. Le dégagement 212 pourra être ménagé sur toute la longueur des au moins deux éléments longitudinaux 208, 210. Le dégagement 212 permettrait le mouvement fluide et indépendant du premier élément longitudinal 208 et du deuxième élément longitudinal 210, en empêchant un contact dur entre leurs bords en regard. Chacun des premier et deuxième éléments longitudinaux 208, 210 pourra comporter au moins deux sections dans le sens de la longueur du véhicule. À titre d'exemple, le premier élément longitudinal 208 pourra comporter une première section 208-1 et une deuxième section 208-2, et le deuxième élément longitudinal 210 pourra comporter une troisième section 210-1 et une quatrième section 210-2. Les sections sont divisées dans le sens de la largeur du véhicule. Les sections pourront être réalisées en un matériau dur et léger, tel qu'un panneau de fibres haute densité ou le polytétrafluoroéthylène (PTFE). Les sections pourront être unies entre elles de façon mobile à leurs extrémités de jonction. À titre d'exemple, la première section 208-1 et la deuxième section 208-2 pourront être unies à leurs extrémités de jonction, et la troisième section 210-1 et la quatrième section 210-2 pourront être unies à leurs extrémités de jonction. Dans une mise en œuvre, les sections pourront être unies entre elles au moyen de charnières d'un type particulier, notamment une charnière simple, une charnière à roulements à billes, une charnière cylindrique, une charnière dissimulée, une charnière à pivot et une charnière à pentures. Par ailleurs, des sections correspondantes de chaque élément longitudinal 208, 210 pourront être enveloppées dans un tissu 308 (illustré sur la figure 3), lequel pourra, de plus ou en variante, servir à maintenir ensemble les sections correspondantes et à donner à chaque élément longitudinal 208, 210 l'aspect d'un seul élément plat dans un état normal/déplié. La première section 208-1 et la deuxième section 208-2 du premier élément longitudinal 208 pourraient être repliées indépendamment de la troisième section 210-1 et de la quatrième section 210-2 du deuxième élément longitudinal 210.

La figure 3 illustre une vue de face en coupe du revêtement de la zone de chargement 202, selon un mode de réalisation de la présente invention. Un élément de renfort 302 pourra être intégré à une ou plusieurs sections du premier élément longitudinal 208 et du deuxième élément longitudinal 210. Dans une mise en œuvre, l'élément de renfort 302 pourra être placé au niveau de bords des sections en regard. À titre d'exemple, l'élément de renfort 302 pourra être intégré à la première section 208-1 et à la troisième section 210-1. L'élément de renfort 302 pourra être une pièce rapportée métallique de forme particulière, par exemple en forme de 'J'. L'élément de renfort 302 pourra être réalisé en d'autres matériaux appropriés, notamment en matières plastiques renforcées comme le polycarbonate, et pourra présenter d'autres formes appropriées, notamment une forme en 'U'. L'élément de renfort 302 pourra être intégré à la première section 208-1 et à la troisième section 210-1 par des fixations à ajustement serré, des adhésifs ou un montage par écrou et boulon, etc. Une fois intégré, un bras supérieur 304 de l'élément de renfort 302 vient en butée contre une surface de dessus et un bras de dessous 306 de l'élément de renfort 302 vient en butée contre une surface de dessous de chacune des première section 208-1 et troisième section 210-1. Le bras de dessous 306 de l'élément de renfort 302 repose sur un bord de dessus de la zone de chargement 202 pour soutenir la charge d'objets placés sur le revêtement. La longueur du bras supérieur 304 est supérieure à la longueur du bras de dessous 306. Une distance minimale entre le bras supérieur 304 le bras de dessous 306 pourra être comprise entre 2,5 mm et 5 mm, en fonction de l'épaisseur du revêtement.

La figure 4 illustre une vue de côté de la zone de chargement 202, selon un mode de réalisation de la présente invention. Le revêtement divise la zone de chargement 202 en un compartiment supérieur 402 et un compartiment inférieur 404. Le compartiment inférieur 404 pourra comporter de multiples sous-compartiments destinés à accueillir séparément des objets différents, tels qu'un pneu de secours, un cric, une bobine de câble et d'autres accessoires. À titre d'exemple, un premier sous-compartiment pourra être présent sous la première section 208-1 et un deuxième sous-compartiment pourra être présent sous la deuxième section 208-2. De la même façon, différents sous-compartiments pourront être présents sous la troisième section 210-1 et la quatrième section 210-2. Pour accéder à un sous-compartiment, il pourra s'avérer nécessaire de retirer une section recouvrant le sous-compartiment, autrement dit de la replier sur une autre section d'un élément longitudinal adjacente à la section. À titre d'exemple, pour accéder au premier sous-compartiment présent sous la première section 208-1, il pourra s'avérer nécessaire de replier la première section 208-1 sur la deuxième section 208-2, suivant leur extrémité de jonction 406. De la même façon, pour accéder au deuxième sous-compartiment présent sous la deuxième section 208-2, il pourra s'avérer nécessaire de replier une nouvelle fois, sur une section suivante 208-3, un agencement replié de la première section 208-1 sur la deuxième section 208-2, suivant leur extrémité de jonction 408.

La figure 5 illustre un mécanisme de soulèvement des éléments longitudinaux 208, 210 du revêtement, selon un mode de réalisation de la présente invention. La première section 208-1 de l'élément longitudinal 208 et la troisième section 210-1 de l'élément longitudinal 210 pourront s'étendre au-delà d'un bord de dessus de la zone de chargement 202, dans la direction longitudinale du véhicule, pour fournir une partie à agripper 502. Un utilisateur se tenant debout à côté de la zone de chargement 202 du véhicule peut soulever la première section 208-1 et/ou la troisième section 210-1, par la partie à agripper 502, et replier un nombre nécessaire de sections. La partie à agripper 502 éliminerait l'obligation de prévoir un mécanisme de soulèvement distinct, tel qu'un crochet ou une poignée en tissu, qui augmenterait le coût global et serait susceptible de s'user et se détériorer.

Si l'on se réfère à nouveau à la figure 4, un ensemble replié 410 des sections 208-1, 208-1, 208-3 empilées les unes sur les autres pourra être positionné le long d'un siège arrière 412 du véhicule, de sorte que les sections 208-1, 208-1, 208-3 soient stables au cours du mouvement du véhicule. Par ailleurs, des crochets ou des clips pourront être prévus sur un dos du siège arrière 412 dans le but d'éviter un dépliage intempestif de l'ensemble replié 410 au cours du mouvement du véhicule. Il faut bien comprendre que les sections 210-1, 210-1 du deuxième élément longitudinal 210 pourront être repliées et empilées ensemble et maintenues contre le siège arrière 412 d'une manière similaire à celle évoquée ci-dessus. De la manière évoquée ci-dessus, le repliage et l'empilage des sections permettraient de fusionner le compartiment supérieur 402 et le compartiment inférieur 404, pour ainsi permettre l'accueil de bagages de grandes dimensions ou volumineux dans la zone de chargement 202 du véhicule.

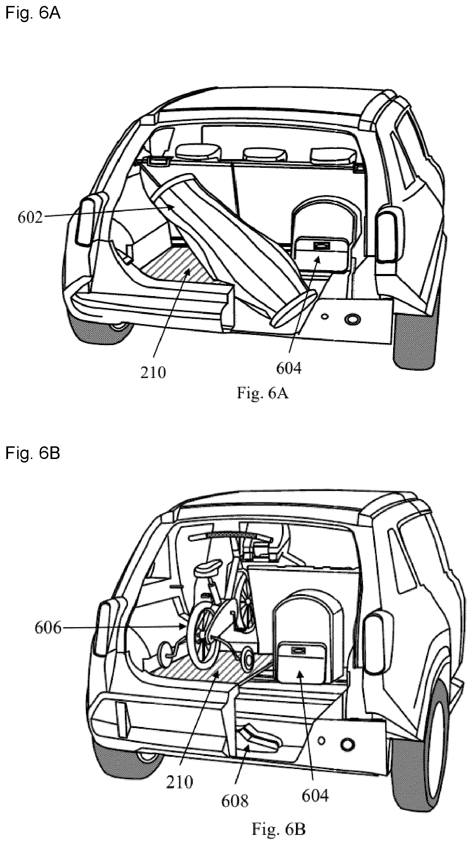

Les figures 6A et 6B illustrent différents agencements réalisés dans la zone de chargement 202 du véhicule pour le rangement de différents types d'objets, selon un mode de réalisation de la présente invention. Comme le montre la figure 6A, la première section 208-1 et la deuxième section 208-2 du premier élément longitudinal 208 sont repliées pour loger un équipement de golf 602 dans la zone de chargement 202. On pourra constater que l'équipement de golf 602 est positionné sur un compartiment de dessous droit et s'étend jusqu'à un compartiment supérieur gauche dans la zone de chargement 202. De cette manière, il serait possible de positionner des objets longs nécessitant d'être positionnés à la verticale, comme l'équipement de golf 602, par repliage sélectif de certaines sections. Qui plus est, dans l'agencement évoqué ci-dessus, il est également possible de ranger des objets dans un compartiment de dessous gauche et de ranger un objet tel qu'une valise 604 sur la section suivante 208-3 du premier élément longitudinal 208.

Comme le montre la figure 6B, le deuxième élément longitudinal 210 pourra être maintenu déplié et un siège arrière gauche pourrait être rabattu pour loger un objet long nécessitant d'être positionné à l'horizontale, comme une bicyclette 606. Plus précisément, la bicyclette 606 pourrait être positionnée sur le deuxième élément longitudinal 210. De plus, des objets de faible hauteur, comme des chaussures 608, pourraient être rangés dans le compartiment de dessous gauche présent sous le deuxième élément longitudinal 210. Dans un agencement de ce type, on pourrait avoir accès aux objets rangés dans le compartiment de dessous gauche par le côté droit, autrement dit en repliant la première section 208-1 et la deuxième section 208-2 du premier élément longitudinal 208. De cette manière, il est possible d'obtenir une utilisation sur plusieurs niveaux de la zone de chargement 202 pour le rangement d'objets de longueurs et hauteurs différentes.

La présente invention convient tout particulièrement à un coffre d'un véhicule lorsque l'utilisateur souhaite avoir accès au compartiment inférieur sans toucher aux bagages placés sur une ou plusieurs sections des éléments longitudinaux. Le revêtement joue le rôle de plancher de charge pour le coffre du véhicule et offre un accès sans entrave au compartiment inférieur situé sous le revêtement. Le revêtement élimine l'obligation de soulever ou de replier la totalité du revêtement lors de l'accès aux compartiments inférieurs et permet une mise en place sécurisée d'un chargement de grandes dimensions ou volumineux dans la zone de chargement sans l'obligation de soulever ou de replier la totalité du revêtement.

Dans la description détaillée ci-dessus, il est fait référence aux dessins joints qui en font partie et illustrent le meilleur mode de mise en oeuvre de l'invention actuellement envisagé. Cette description ne saurait toutefois être considérée comme limitant de quelque manière que ce soit la portée de la présente invention. La structure ainsi envisagée dans la présente description est susceptible de nombreuses modifications et variantes, tous les détails peuvent en outre être remplacés par des éléments techniquement équivalents. Dans la pratique, les matériaux et dimensions pourront être quelconques selon les besoins, sans que l'on s'écarte du cadre de l'invention telle que revendiquée:
Les modes de réalisation indiqués dans les présentes ne sont donnés qu'à titre d'exemple et d'autres modes de réalisation sont possibles dans le cadre de l'invention.

## Revendications

1. Zone de chargement (202) d'un véhicule, comprenant un revêtement comportant au moins deux éléments longitudinaux (208, 210) pour recouvrir la zone de chargement (202), les au moins deux éléments longitudinaux (208, 210) étant manœuvrables indépendamment pour permettre l'accès à au moins une partie de la zone de chargement (202), dans laquelle chacun des au moins deux éléments longitudinaux (208, 210) comporte au moins deux sections (208-1, 208-2, 210-1, 210-2) dans le sens d'une largeur du véhicule, les au moins deux sections (208-1, 208-2, 210-1, 210-2) étant unies entre elles de façon mobile au niveau d'extrémités de jonction, **caractérisée en ce qu'**elle comprend en outre des éléments de renfort (302) intégrés à une ou plusieurs sections (208-1, 208-2, 210-1, 210-2) des au moins deux éléments longitudinaux (208, 210), les éléments de renfort (302) étant intégrés au niveau d'un bord des éléments longitudinaux (208, 210) en regard d'un autre, et de bras de dessous (306) des éléments de renfort (302) reposant sur un bord de dessus de la zone de chargement (202) pour soutenir la charge d'objets placés sur le revêtement.

2. Zone de chargement (202) selon la revendication 1, dans laquelle les au moins deux sections (208-1, 208-2, 210-1, 210-2) de chaque élément longitudinal (208, 210) sont enveloppées dans un tissu (308) pour rester en contact entre elles et permettre un mouvement au niveau des extrémités de jonction.

3. Zone de chargement (202) selon la revendication 2, dans laquelle les au moins deux sections (208-1, 208-2, 210-1, 210-2) de chaque élément longitudinal (208, 210) sont repliables, les unes sur les autres, en partant d'une extrémité arrière du véhicule.

4. Zone de chargement (202) selon la revendication 3, dans laquelle les au moins deux sections (208-1, 208-2, 210-1, 210-2) de chaque élément longitudinal (208, 210) sont repliées pour s'empiler contre un siège arrière du véhicule de sorte que lesdites sections (208-1, 208-2, 210-1, 210-2) repliées soient stables au cours du mouvement du véhicule.

5. Zone de chargement (202) selon l'une quelconque des revendications 1 ou 2, dans laquelle des extrémités arrière de chaque élément longitudinal (208, 210) s'étendent au-delà d'un bord de dessus de la zone de chargement (202) pour permettre une manœuvre individuelle de chaque élément longitudinal (208, 210).

6. Zone de chargement (202) selon la revendication 1, dans laquelle ledit élément de renfort (302) est une pièce rapportée en forme de 'J'.

## Patentansprüche

1. Laderaum (202) eines Fahrzeugs, welcher eine Verkleidung umfasst, die mindestens zwei Längselemente (208, 210) zum Bedecken des Laderaumes (202) aufweist, wobei die mindestens zwei Längselemente (208, 210) unabhängig handhabbar sind, um den Zugang zu wenigstens einem Teil des Laderaumes (202) zu ermöglichen, wobei jedes der mindestens zwei Längselemente (208, 210) mindestens zwei Abschnitte (208-1, 208-2, 210-1, 210-2) in der Richtung einer Breite des Fahrzeugs aufweist, wobei die mindestens zwei Abschnitte (208-1, 208-2, 210-1, 210-2) an Verbindungsenden beweglich miteinander vereinigt sind, **dadurch gekennzeichnet, dass** er außerdem Verstärkungselemente (302) umfasst, die in einen oder mehrere Abschnitte (208-1, 208-2, 210-1, 210-2) der mindestens zwei Längselemente (208, 210) integriert sind, wobei die Verstärkungselemente (302) an einem Rand der Längselemente (208, 210) integriert sind, der einem anderen gegenüberliegt, und untere Arme (306) der Verstärkungselemente (302), die auf einem oberen Rand des Laderaumes (202) ruhen, um die Last von Gegenständen zu stützen, die auf der Verkleidung abgestellt sind.

2. Laderaum (202) nach Anspruch 1, wobei die mindestens zwei Abschnitte (208-1, 208-2, 210-1, 210-2) jedes Längselements (208, 210) in einen Stoff (308) eingewickelt sind, um miteinander in Kontakt zu bleiben und eine Bewegung an den Verbindungsenden zu ermöglichen.

3. Laderaum (202) nach Anspruch 2, wobei die mindestens zwei Abschnitte (208-1, 208-2, 210-1, 210-2) jedes Längselements (208, 210) von einem hinteren Ende des Fahrzeugs aus aufeinander klappbar sind.

4. Laderaum (202) nach Anspruch 3, wobei die mindestens zwei Abschnitte (208-1, 208-2, 210-1, 210-2)) jedes Längselements (208, 210) umgeklappt sind, um an einem Rücksitz des Fahrzeugs anzuliegen, so dass die umgeklappten Abschnitte (208-1, 208-2, 210-1, 210-2) während der Bewegung des Fahrzeugs stabil sind.

5. Laderaum (202) nach einem der Ansprüche 1 oder 2, wobei sich die hinteren Enden jedes Längselements (208, 210) über einen oberen Rand des Laderaumes (202) hinaus erstrecken, um eine individuelle Handhabung jedes Längselements (208, 210) zu ermöglichen.

6. Laderaum (202) nach Anspruch 1, wobei das Verstärkungselement (302) ein Einsatzteil von der Form eines "J" ist.

## Claims

1. Loading area (202) of a vehicle, comprising a covering having at least two longitudinal elements (208, 210) for covering the loading area (202), the at least two longitudinal elements (208, 210) being manoeuvrable independently to allow access to at least part of the loading area (202), wherein each of the at least two longitudinal elements (208, 210) comprises at least two sections (208-1, 208-2, 210-1, 210-2) in the direction of a width of the vehicle, the at least two sections (208-1, 208-2, 210-1, 210-2) being joined to one another movably at joining ends, **characterized in that** it further comprises reinforcing elements (302) integrated into one or more sections (208-1, 208-2, 210-1, 210-2) of the at least two longitudinal elements (208, 210), the reinforcing elements (302) being integrated at one edge of the longitudinal elements (208, 210) facing one another, and bottom arms (306) of the reinforcing elements (302) resting on a top edge of the loading area (202) to support the load of objects placed on the covering.

2. Loading area (202) according to Claim 1, wherein the at least two sections (208-1, 208-2, 210-1, 210-2) of each longitudinal element (208, 210) are enveloped in a fabric (308) to remain in contact with one another and allow a movement at the joining ends.

3. Loading area (202) according to Claim 2, wherein the at least two sections (208-1, 208-2, 210-1, 210-2) of each longitudinal element (208, 210) are foldable on one another starting from a rear end of the vehicle.

4. Loading area (202) according to Claim 3, wherein the at least two sections (208-1, 208-2, 210-1, 210-2) of each longitudinal element (208, 210) are folded to stack against a rear seat of the vehicle such that said folded sections (208-1, 208-2, 210-1, 210-2) are stable during the movement of the vehicle.

5. Loading area (202) according to either one of Claims 1 and 2, wherein rear ends of each longitudinal element (208, 210) extend beyond a top edge of the loading area (202) to allow individual manoeuvring of each longitudinal element (208, 210).

6. Loading area (202) according to Claim 1, wherein said reinforcing element (302) is a J-shaped add-on part.
